# EUROPEAN PATENT SPECIFICATION

(11) **EP 4 190 005 B1**
(45) Date of publication and mention of the grant of the patent: **18.02.2026**
(21) Application number: 21759257.5
(22) Date of filing: 03.08.2021
(51) Int. Cl.: H04W 24/02, H04L 27/26, H04W 24/08, H04W 48/12, H04W 48/16, H04W 56/00, H04W 84/04, H04J 11/00

(54) **ESTABLISHING A WIRELESS CONNECTION WITH A MOBILE DEVICE**
AUFBAU EINER DRAHTLOSEN VERBINDUNG MIT EINER MOBILEN VORRICHTUNG
ÉTABLISSEMENT D'UNE CONNEXION SANS FIL AVEC UN DISPOSITIF MOBILE

(30) Priority: 03.08.2020 GB 202012046
(43) Date of publication of application: 07.06.2023
(73) Proprietor: CellXion Ltd, London WC1V 7HP (GB)
(72) Inventor: TIMSON, Anthony, London WC1V 7HP (GB)
(74) Representative: EIP
(86) International application number: PCT/EP2021/071697
(87) International publication number: WO 2022/029141

(56) References cited:
- US-A1- 2009 305 702
- US-A1- 2011 211 537
- LICHTMAN MARC ET AL: "Vulnerability of LTE to hostile interference", 2013 IEEE GLOBAL CONFERENCE ON SIGNAL AND INFORMATION PROCESSING, IEEE, 3 December 2013 (2013-12-03), pages 285 - 288, XP032566692, DOI: 10.1109/GLOBALSIP.2013.6736871
- LABIB MINA ET AL: "Enhancing the Robustness of LTE Systems: Analysis and Evolution of the Cell Selection Process", IEEE COMMUNICATIONS MAGAZINE, IEEE SERVICE CENTER, PISCATAWAY, US, vol. 21155, no. 2, 1 February 2017 (2017-02-01) - 1 February 2017 (2017-02-01), pages 208 - 215, XP011640293, ISSN: 0163-6804, [retrieved on 20170202], DOI: 10.1109/MCOM.2017.1500706CM

## Description

### Technical Field

The present invention relates to the establishing of a wireless connection between a base station apparatus and a mobile communications device in accordance with a mobile communications standard. The invention has particular, but not exclusive, relevance to the establishing of a wireless connection between a base station apparatus and a mobile communications device in accordance with the LTE or LTE-A mobile communication standard.

### Background

According to various mobile communications standards, including long-term evolution (LTE) and long-term evolution advanced (LTE-A), a user equipment (UE) camping on a serving cell of a cellular network is required to regularly measure signal characteristics of downlink signals transmitted by base stations of the serving cell and neighbouring cells, for example received signal strength and/or signal quality. These measurements are used by the UE to decide, on the basis of a set of cell reselection criteria, whether or not a cell reselection should be performed, causing the UE to camp on one of the neighbouring cells.

Under certain circumstances, it is desired to force a UE to camp on a specific cell. For example, a dedicated base station may be deployed in association with a sports or entertainment event and it may be desired that attendees camp on that dedicated base station rather than the existing base stations in the vicinity. In another example, a dedicated base station may be deployed in or around an airport, stadium or other facility to provide limited or modified services, or to prevent access to the mobile communications network altogether, from within the facility.

In order to cause a UE to perform cell reselection to a target cell, it is necessary for the corresponding signal characteristics measured by the UE to satisfy the cell reselection criteria. This can usually be achieved by transmitting a powerful enough downlink signal in the target cell. However, if the UE measures a sufficiently high signal strength and/or signal quality for the serving cell on which the UE is currently camping, the UE may be permitted to enter a power-saving "perfect cell" mode, in which the UE only monitors the signal characteristics for the serving cell and no longer measures signal characteristics for the neighbouring cells. As a result, no reselection will be performed, irrespective of the power of the downlink signal transmitted by the base station of the target cell.

The article "Vulnerability of LTE to Hostile Interference" by Marc Lichtman et al, 2013 IEEE GLOBAL CONFERENCE ON SIGNAL AND INFORMATION PROCESSING, IEEE, 3 December 2013, investigates the extent to which LTE is vulnerable to intentional jamming, by analysing the components of the LTE downlink and uplink signals. The LTE physical layer consists of several physical channels and signals, most of which are vital to the operation of the link. By taking into account the density of these physical channels and signals with respect to the entire frame, as well as the modulation and coding schemes involved, we come up with a series of vulnerability metrics in the form of jammer to signal ratios. The "weakest links" of the LTE signals are then identified, and used to establish the overall vulnerability of LTE to hostile interference.

US patent publication US 2011/0211537 discusses a method that includes determining a binary sequence based on a number of symbols in a frame associated with a macro cell. The method further includes performing an autocorrelation calculation on the binary sequence. The method further includes determining a time offset based on minimum values of the autocorrelation calculation. The method further includes broadcasting a control signal including the time offset to a plurality of small cells. The method further includes receiving the control signal including the time offset associated with the frame associated with the macro cell. The method further includes transmitting a frame associated with a small cell synchronized with a frame associated with the macro cell and offset intime by the time offset.

The article "Enhancing the Robustness of LTE Systems: Analysis and Evolution of the Cell Selection Process" by Mina Labib et al, IEEE COMMUNICATIONS MAGAZINE, 1 February 2017, discloses that an intentional RF spoofing technique in the LTE system consits in setting up a fake eNodeB transmitting some of the LTE signals and higher-layer control messages. If this fake eNodeB appears as the strongest cell at the UE for a given frequency channel, the UE will try to camp on this fake cell and will not be able to select any other LTE cell in that channel.

### Summary

The invention is defined in the appended claims.

According to a first aspect of the present invention, there is provided a method of establishing a wireless connection between a base station apparatus and a mobile communications device in accordance with a mobile communication standard in which data is communicated by wireless signals using orthogonal frequency-division multiplexing. The method includes: allocating a first set of resource blocks of a system frame for transmitting data from the base station apparatus to the mobile communications device via a downlink signal within a given frequency band, the data comprising broadcast control signals including a primary synchronisation signal (PSS), a secondary synchronisation signal (SSS), and a physical broadcast channel (PBCH); transmitting, by the base station apparatus, an interference signal in a second set of resource blocks of the system frame, the second set of resource blocks being within the given frequency band and different from the first set of resource blocks, wherein the interference signal is configured to interfere with broadcast control signals transmitted by base stations of one or more cells of a mobile communication network; and transmitting, by the base station apparatus, the downlink signal within the first set of resource blocks of the system frame. The transmitting of the interference signal and the downlink signal causes the mobile communications device to undergo cell reselection, thereby to establish the wireless connection between the base station apparatus and the mobile communications device.

A mobile communications device camping on a serving cell may regularly check the broadcast control signals of the serving cell to determine whether there have been any changes to characteristics of the serving cell. In cases where the mobile communications device may have entered a perfect cell mode, transmitting the interference signal in resource blocks containing the broadcast control signals has been found to be an effective means of forcing the mobile communications device out of perfect cell mode, thus facilitating reselection away from the one or more cells of the mobile communication network.

In examples, the transmitted interference signal is contained within a portion of the frequency band in which the broadcast control signals are transmitted. Selectively transmitting the interference signal in the portion of the frequency band in which the broadcast control signals are transmitted provides an efficient means of forcing the mobile communications device to exit perfect cell mode, for example when it is not feasible to transmit the interference signal throughout the entire frequency band.

In examples, the interference signal is further configured to degrade measurements by the mobile communications device of reference signals transmitted by the base stations of said one or more cells of the mobile communications network in one or more portions of the frequency band in which the broadcast reference signals are not transmitted. A mobile communications device camping on a serving cell may regularly measure reference signals transmitted by the serving cell and use the measurements to determine whether to measure downlink signals transmitted in neighbouring cells, and/or whether to perform a cell reselection to a neighbouring cell. By degrading measurements of these reference signals, the effectiveness of the interference signal at forcing the mobile communications device out of perfect cell mode may be increased.

In examples, allocating the first set of resource blocks for transmitting the data via the downlink signal includes determining timings of the broadcast control signals transmitted by the base stations of said one or more cells of the mobile communications network, and allocating the first set of resource blocks so that broadcast control signals transmitted by the base station apparatus do not interfere with the broadcast control signals transmitted by the base stations of said one or more cells of the mobile communications network. Allocating the first set of resource blocks in this way facilitates reselection to the base station apparatus when the mobile communications device has exited perfect cell mode, because the broadcast control signals of the base station apparatus do not have to compete with broadcast control signals transmitted by the cells of the mobile communications network. The broadcast control signals of the base station apparatus are therefore more readily detected and decoded by the mobile communications device, simplifying the task of error correction software in the mobile communications device in distinguishing between the broadcast control signals.

In examples, the downlink signal is a first downlink signal, and the method includes measuring a received signal strength and/or received signal quality of a second downlink signal transmitted by one of the base stations of the mobile communications network, and the transmitting of the interference signal is dependent on the measured received signal strength and/or received signal quality of the second downlink signal exceeding a threshold. This avoids unnecessary transmitting of an interference signal, for example where no neighbouring cell is a candidate perfect cell in a target operational area. Furthermore, the bandwidth of the interference signal may be dependent on the measured received signal strength and/or received signal quality of the second downlink signal. If the second downlink signal has a high received signal strength or signal quality, a relatively large bandwidth may be necessary for the interference signal to sufficiently degrade measurements of the second downlink signal by the mobile communications device. On the other hand, if the second downlink signal has a relatively low received signal strength and/or received signal quality, a smaller bandwidth, and accordingly lower transmitter power, may be sufficient.

In examples where the transmitting of the interference signal is dependent on the received signal strength and/or received signal quality of the second downlink signal exceeding a threshold, the threshold may be dependent on a parameter transmitted within the second downlink signal indicating a minimum received signal strength and/or received signal quality of the second downlink signal for mobile communications devices to refrain from performing measurements of downlink signals other than the second downlink signal. In this way, the threshold for transmitting the interference signal is responsive to the perfect cell criteria of the neighbouring cell.

According to a second aspect of the invention, there is provided base station apparatus for establishing a wireless connection with a mobile communications device in accordance with a mobile communication standard in which data is communicated by wireless signals using orthogonal frequency-division multiplexing. The base station apparatus includes a transmitter, and processing circuitry arranged to allocate a first set of resource blocks of a system frame for transmitting data from the transmitter to the mobile communications device via a downlink signal within a given frequency band, the data comprising broadcast control signals including a PSS, an SSS, and a PBCH. The base station apparatus is arranged to transmit, using the transmitter, an interference signal in a second set of resource blocks of the system frame, the second set of resource blocks being within the given frequency band and different from the first set of resource blocks, wherein the interference signal is configured to interfere with broadcast control signals transmitted by base stations of one or more cells of a mobile communication network; and transmitting, using the transmitter, the downlink signal within the first set of resource blocks of the system frame. The transmitting of the interference signal and the downlink signal causes the mobile communications device to undergo cell reselection, thereby to establish the wireless connection between the base station apparatus and the mobile communications device.

Further features and advantages of the invention will become apparent from the following description of preferred embodiments of the invention, given by way of example only, which is made with reference to the accompanying drawings.

### Brief Description of the Drawings

Figure 1 shows an example of a mobile communications device moving between cells of a cellular network;

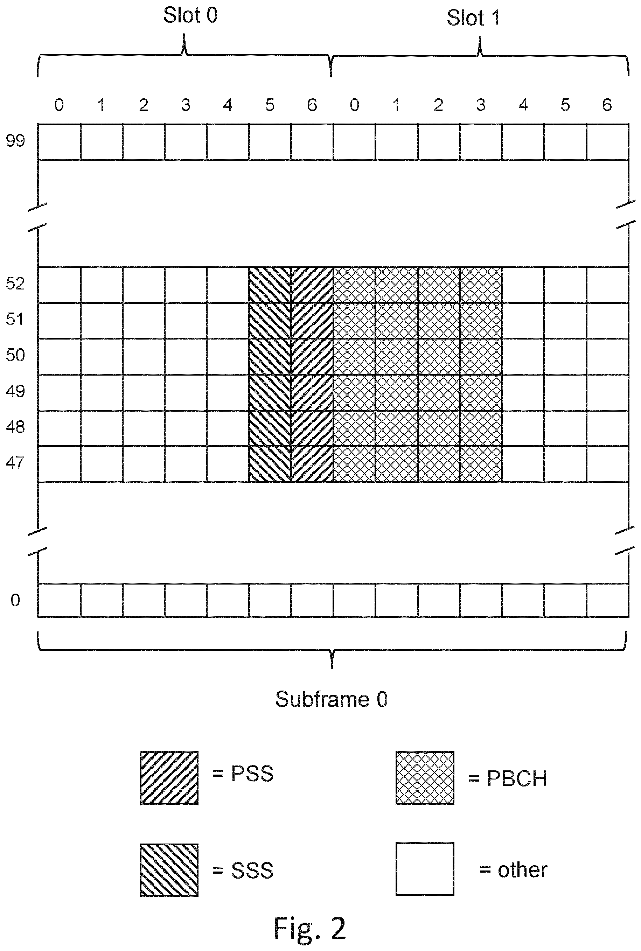

Figure 2 is a resource grid showing a configuration of broadcast control signals according to the long-term evolution (LTE) standard;
Figure 3 shows a configuration of signals transmitted by a base station apparatus in accordance with examples; Figure 4 shows a further configuration of signals transmitted by a base station apparatus in accordance with examples;
Figure 5 shows a still further configuration of signals transmitted by a base station apparatus in accordance with examples;
Figure 6 is a flow chart showing a method of establishing a connection with a mobile communications device in accordance with examples;
Figure 7 is a resource grid showing a possible configuration of an LTE cell-specific reference signal (CRS).

### Detailed Description

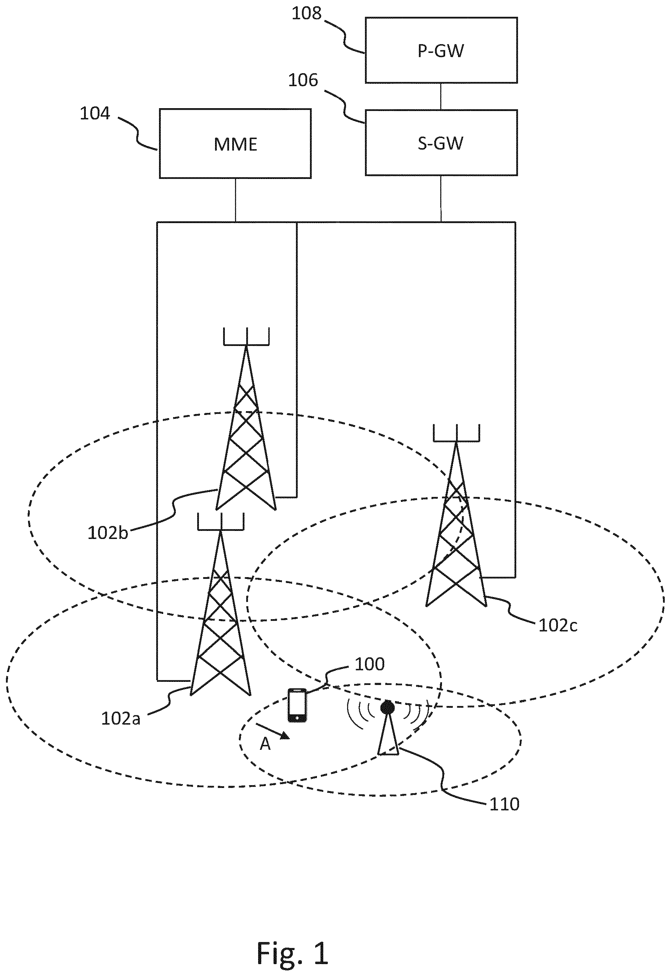

Figure 1 shows an example in which a user equipment (UE) 100 communicates with a mobile communications network in accordance with the long-term evolution (LTE) standard. Under the LTE standard, a radio station is implemented as part of an Evolved Node B (eNodeB or eNB) of an Evolved-UMTS Terrestrial Radio Access Network (E-UTRAN). As shown in Figure 1, the eNodeBs 102a-102c, collectively referred to as eNodeBs 102, are connected to a Mobility Management Entity (MME) 104 and Serving Gateway (S-GW) 106 of an Evolved Packet Core (EPC) network. The S-GW is further connected to a Packet Data Network Gateway (P-GW) 108. Each of the eNodeBs 102 is thereby capable of providing the UE 100 with access to a public land mobile network (PLMN). The approximate area of coverage of each of the eNodeBs 102 is contained within a respective dashed circle centred at that eNodeB 102.

Figure 1 further includes a separately introduced base station 110 (referred to hereafter as independent base station 110), which in this example is not connected to the PLMN accessible via the eNodeBs 102. The independent base station 110 in this example includes a receiver and a transmitter, and has the same capabilities as an LTE-compliant UE to perform synchronisation, measurements of signal characteristics, and other functions in relation to the networked base stations 102a-c. In the present example, the receiver and UE functions are integrated into the independent base station 110, though in other examples an independent base station can be physically connected to a separate test UE located in the vicinity of the independent base station. In other examples, an independent base station may not be required to have a receiver at all, and can for example be a simplex device arranged to transmit downlink signals only. The independent base station 110 provides coverage within an area shown by the dashed circle centred at the independent base station 110. In this example, the area of coverage contains a stadium for sporting events (not shown), and it is desirable that any UE within the stadium camps on the cell corresponding to the independent base station 110, as opposed to any other cell. The cell corresponding to the independent base station 110 is thus referred to as a target cell. It is observed that the coverage area of the independent base station 110 overlaps significantly with the coverage area of the eNodeB 102a. There is a need to ensure that the UE 100 performs a cell reselection as the UE 100 enters the coverage area of the independent base station 110 from within the coverage area of the eNodeB 102a, for example in a direction shown by the arrow A.

In order for a cell reselection to take place, cell reselection criteria must be satisfied as specified in 3GPP TS 36.304 sections 5.2.4.5 and 5.2.4.6. The specific criteria which apply depend on whether the frequency band and radio access technology (RAT) of the target cell is the same as the frequency band and RAT of the currently serving cell, and if not, whether the frequency band and RAT of the target cell has a higher, lower, or equal reselection priority compared with the frequency band and RAT of the currently serving cell. In any case, a UE can only perform a cell reselection if the UE measures a reference signal received power (RSRP) of the target cell to be greater than a certain threshold value (which can be derived from system information transmitted by the serving cell, and may depend on the RSRP of the serving cell).

From the above considerations, it is clear that a UE will only perform a cell reselection if the UE actively measures signal characteristics of signals transmitted within candidate cells for reselection. However, 3GPP TS 36.304 section 5.2.4.2 permits a UE to forego inter-frequency and/or intra-frequency measurements of candidate cells if the following respective measurement criteria are satisfied:
1. for intra-frequency candidate cells, the Srxlev value for the serving cell is less than a threshold value S_{intrasearch}, if such a value is specified in system information transmitted by the serving base station; and
2. for inter-frequency and/or inter-RAT candidate cells, the reselection priority of the candidate cell is equal or lower than the reselection priority of the serving cell and the Srxlev value for the serving cell is less than a threshold value Snonintrasearch, if such a value is specified in system information transmitted by the serving base station,
where Srxlev is derived from RSRP values of downlink signals in accordance with various parameters as described in 3GPP TS 36.304 section 5.2.3.2.

From the above criteria, it can be seen that the independent base station 110 would be able to avoid the "perfect cell" problem by operating at a frequency with a higher cell reselection priority than that of the networked base station 102a. In this case, the measurement criteria above would not be satisfied, and the cell of the networked base station 102a would therefore be forced to measure the frequency band of the independent base station 110, irrespective of the signal power/quality of the downlink signal received from the networked base station 102a. However, it is not guaranteed that a higher-priority frequency band exists, and even if such frequency bands do exist, other considerations may prevent an independent base station from operating within one of the higher-priority frequency bands.

In the example of Figure 1, the independent base station 110 operates in the same frequency band and uses the same RAT as the eNodeB 102a, so the target cell of the independent base station 110 is an intra-frequency cell. Therefore, measurement criterion 1 above applies. Assuming that the eNodeB 102a transmits a value for S_{intrasearch}, the UE 100 is permitted to enter a perfect cell mode with respect to intra-frequency cells, in which case the UE 100 will refrain from measuring intra-frequency cells if the signal strength received from the eNodeB 102a is sufficiently high, and accordingly no cell reselection to the independent base station 110 will be possible. This is likely to be the case if the UE 100 moves into the coverage area of the independent base station 110 from a relatively central region of the coverage area of the eNodeB 102a, for example as shown by the arrow A. Although perfect cell mode is not a requirement of the LTE specification (the UE 100 is permitted to keep making measurements even when criteria 1 and 2 are satisfied), it is expected that UE manufacturers will make use of this possibility for energy saving reasons.

In order to avoid a situation where the UE 100 enters the coverage area of the independent base station 110 but does not perform a cell reselection, the independent base station 110 is configured to perform a method to help facilitate cell reselection by the UE 100. In order to do so, the independent base station 110 allocates a first set of PRBs in which to transmit data via a downlink signal within a given frequency band. The allocated PRBs include PRBs for transmitting control plane data and optionally PRBs for transmitting user plane data, depending on the specific application of the independent base station 110.

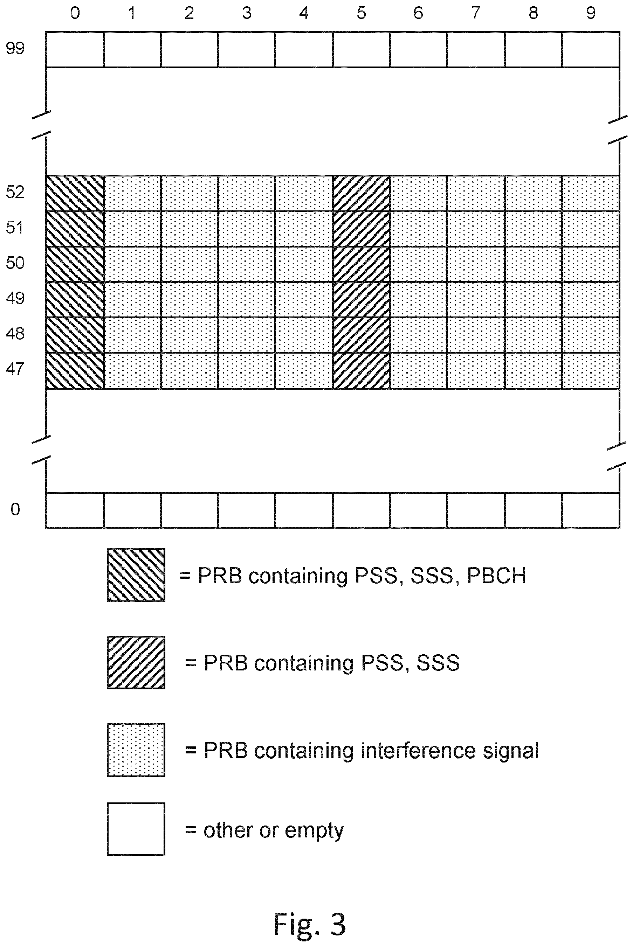

In accordance with the LTE specification, the independent base station 110 allocates PRBs in which to transmit a set of broadcast control signals. The broadcast control signals are allocated in a predetermined configuration in subframes 0 and 5 of each system frame, within a central control region of the frequency band. The broadcast control signals include a primary synchronisation (PSS), a secondary synchronisation signal (SSS), and a physical broadcast channel (PBCH). Figure 3 shows a resource map including the central control region for subframe 0 of a system frame in 20MHz LTE. The subcarriers are indexed in groups of 12 (the number of subcarriers in a physical resource block (PRB)) from 0 to 99. A PRB in LTE includes 6 orthogonal frequency division multiplex (OFDM) symbols (one "slot" or half a subframe) transmitted on 12 subcarriers, and is the minimum time-frequency unit that can be allocated to user plane data for a single user. The control region, in which the PSS, SSS and PBCH are transmitted, contains 72 subcarriers occupying subcarrier groups 47 to 52. The control region occupies different subcarrier groups for different LTE bandwidths, but is generally located centrally within the frequency band. Figures 3 to 5 shows PRBs containing the broadcast control signals within a system frame for 20MHz LTE.

In the present example, the subframe timing and the allocation of the first set of PRBs for the downlink signal is performed independently of any signals transmitted by eNodeBs 102 of the mobile communications network. In this way, the independent base station 110 is not required to scan for neighbouring cells in order to determine the subframe timing or to allocate the first set of PRBs. In other examples, the subframe timing can be made dependent on signals transmitted by neighbouring cells, as will be explained in more detail hereafter. Furthermore, in some examples the first set of PRBs may be allocated/scheduled in dependence on signals exchanged with eNodeBs 102 in the vicinity of the independent base station 110, for example using the X2 interface.

The independent base station 110 transmits the downlink signal in the allocated first set of PRBs, and further transmits an interference signal configured to interfere with broadcast control signals transmitted by eNodeBs 102 operating within the same frequency band in the vicinity of the independent base station 110. The interference signal is transmitted in a second set of PRBs which is different from the first set of PRBs in which the independent base station 110 transmits its downlink signal. In the present example, the second set of PRBs is disjoint from the first set of PRBs. In other words, the interference signal is not transmitted in the PRBs allocated to the downlink signal of the target cell, so the interference signal does not interfere with PRBs carrying the downlink signal of the target cell. In other examples, the interference signal may share certain PRBs with the downlink signal of the target cell. For example, the interference signal may further be transmitted in the PRBs containing the PSS, SSS and PBCH, but in resource elements that are not occupied by the PSS, SSS and PBCH.

A UE camping on a serving cell will regularly check the broadcast control signals (PSS, SSS and PBCH) of the serving cell, to determine whether there have been any changes to characteristics of the serving cell. The inventor has discovered that interfering with the broadcast control signals within the control region of the downlink signal can cause a UE to exit perfect cell mode, irrespective of the strength and quality of the CRS in other regions of the frequency band. Furthermore, interfering with the broadcast control signals transmitted by a given cell can prevent a UE from camping on that cell in the first place. Selectively transmitting the interference signal in a narrow portion of the frequency band containing the control region therefore provides an efficient means of degrading the second downlink signals, for example when it is not feasible to transmit the interference signal throughout the entire frequency band due to power limitations of the amplifier of the independent base station 110. Figure 3 shows an example configuration of PRBs transmitted by the independent base station 110. In this example, an interference signal is contained entirely within the central control region of the frequency band in which the broadcast control signals (PSS, SSS and PBCH) are transmitted. The interference signal is transmitted in all PRBs in the control region not used by the independent base station 110, which in this example includes only the PRBs containing the broadcast control signals.

In some examples, the interference signal can be configured to extend into regions of the frequency band in which the broadcast reference signals are not transmitted. In this way, the interference signal can effectively degrade measurements by UEs of reference signals transmitted by eNodeBs of the mobile communications network. In LTE, measurements of RSRP and RSRQ, on which the cell reselection criteria are based, are performed using a cell-specific reference signal (CRS) which is transmitted throughout the frequency band. An effective way to degrade measurements of a given downlink signal is therefore to transmit the interference signal in resource elements containing the CRS of the given downlink signal. Transmitting the interference signal over a wider frequency range will typically result in more effective degrading of measurements of downlink signals by mobile communications devices, as the interference signal will occupy more resource elements occupied by the CRS of the downlink signals. Increasing the bandwidth and/or the power of the interference signal generally increases the size of the region in which the independent base station 110 can force a cell reselection from a candidate perfect cell to the target cell, and furthermore causes cell reselections to occur more quickly.

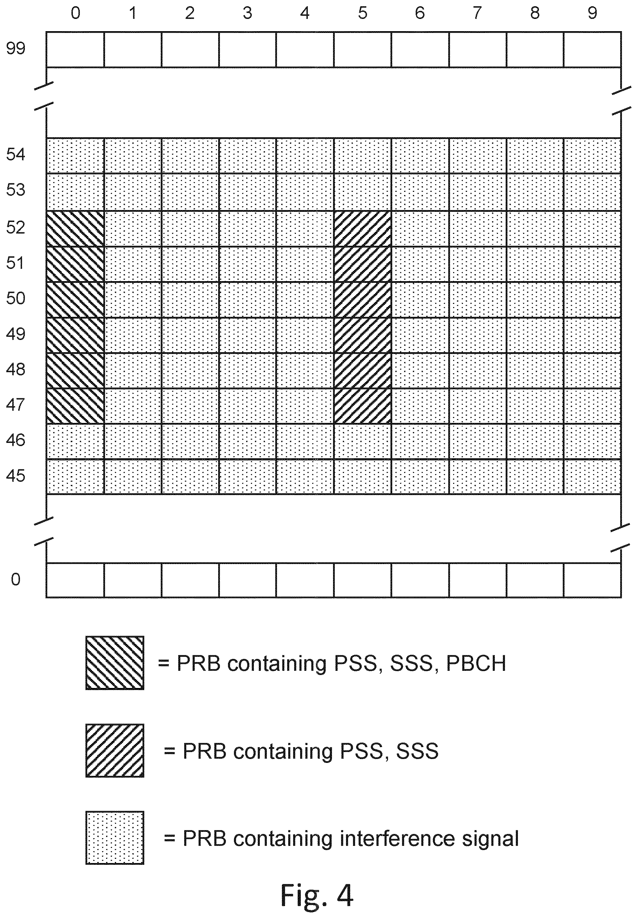

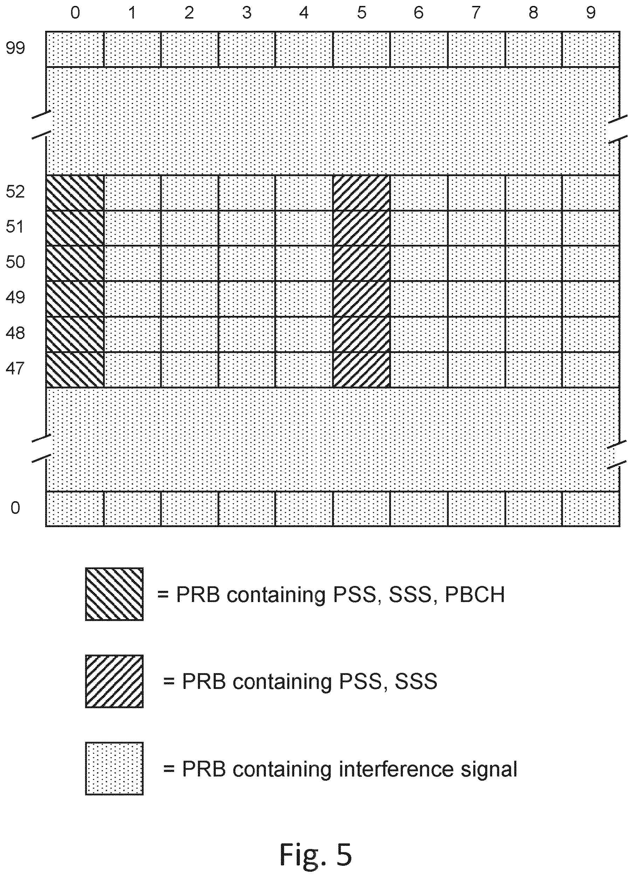

Figure 4 shows a further example in which an interference signal occupies a wider region of the frequency band that includes the control region and also includes several subcarriers at frequencies either side of the control region. Figure 5 shows a still further example in which an interference signal is transmitted throughout the entire the frequency band. This is the most aggressive interference strategy, and will degrade measurements of as many cells as possible, other than the target cell, as effectively as possible. Such an approach may be suitable, for example, if an independent base station of the target cell is positioned within a central region of another cell. However, this method requires the transmitter of the independent base station to operate at 100% duty cycle throughout the frequency band, and as a result requires the amplifier of the independent base station 110 to operate at a very high power.

Since the independent base station 110 must transmit its own downlink signal within the same frequency band as the interference signal, the interference signal should be configured to avoid PRBs needed for the downlink signal of the independent base station 110, and resource elements occupied by the CRS transmitted by the independent base station 110. The independent base station 110 may, for example, transmit the interference signal in every resource element of every PRB within a given frequency range, except for:
- PRBs needed for the downlink signal of the independent base station 110; and
- resource elements used for the CRS of the independent base station 110.

Since the allocation of PRBs in the downlink signal can change over time, the configuration of the interference signal may need to be updated dynamically in order continue degrading measurements of the candidate perfect cell, whilst avoiding PRBs used by the target cell of the independent base station 110.

The interference signal may be any suitable form of signal suitable for interfering with downlink signals transmitted by the eNodeBs 102. The interference may comprise, for example, random or pseudo-random data bits transmitted in the appropriate PRBs or resource elements as described above, frequency-limited noise such as additive Gaussian white noise (AGWN), or a specific waveform which is arranged to interfere destructively with CRSs transmitted by the eNodeBs 102.

Although in the example above the independent base station 110 determines a subframe timing and allocates PRBs for the downlink signal and interference signal independently of any of the eNodeBs 102, in another example the system may be arranged to determine a subframe timing and PRB allocation in dependence on the eNodeBs 102, and particularly those eNodeBs 102 which are candidate perfect cells for UEs in the vicinity of the independent base station 110.

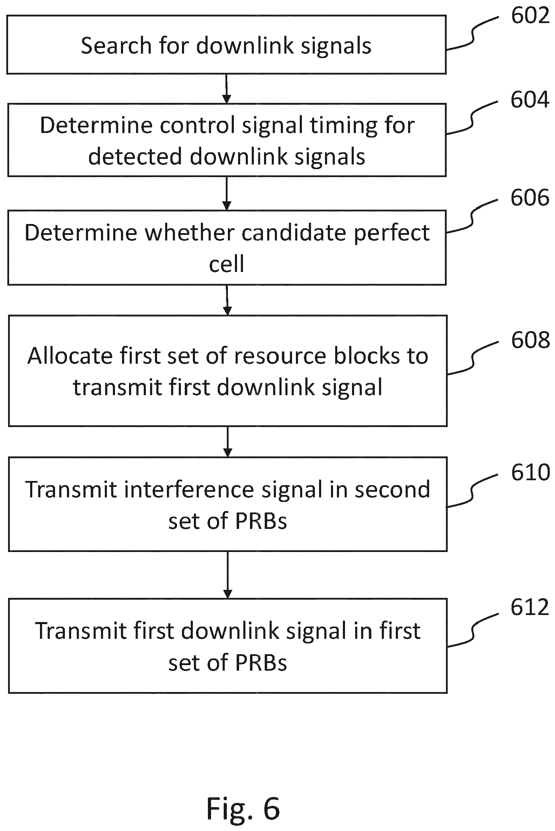

Figure 6 shows an example of an alternative method performed by the independent base station 110. After being deployed at a desired location, the independent base station 110 uses its UE capabilities to search, at 602, for downlink signals. Searching for downlink signals in this example involves scanning relevant frequency bands for a PSS, which has a predetermined sequence and can therefore be identified using cross-correlation with a stored copy of that predetermined sequence.

Upon detecting a downlink signal, the independent base station 110 uses the PSS of the detected downlink signal to determine, at 604, a timing of a set of broadcast control signals of the detected downlink signal. The set of broadcast control signals including the PSS, a secondary synchronisation signal (SSS), and a physical broadcast channel (PBCH). These broadcast control signals are transmitted in a predetermined configuration within a central control region of the frequency band, as described above.

In the present example, the independent base station 110 determines, at 606, whether any detected downlink signal corresponds to a candidate perfect cell. A candidate perfect cell is one that has a sufficiently high signal strength and/or signal quality in at least a portion of the target cell that a mobile communications device camped on the candidate perfect cell may be permitted not to make measurements of neighbouring cells whilst located in the target cell.

In the present example, determining whether the cell is a candidate perfect involves first determining whether the relevant measurement threshold S_{intrasearch} is defined in the system information (specifically, in the system information block-type 3, SIB-3). If S_{intrasearch} is not defined, the cell is not a candidate perfect cell, because the measurement criterion 1 cannot be satisfied. If S_{intrasearch} is defined, the independent base station 110 measures the RSRP of the downlink signal, and determines whether the resulting Srxlev value is greater than a threshold value S_{perfectcell}. If Srxlev > S_{perfectcell}, then the cell corresponding to the downlink signal is a candidate perfect cell. The value of S_{perfectcell} is set to a value such that a downlink signal satisfying the measurement criterion 1 for a UE anywhere in the coverage area of the independent base station 110 will also satisfy the candidate perfect cell criterion Srxlev > S_{perfectcell} at the independent base station 110 (S_{perfectcell} will therefore typically be set to a lower value than S_{intrasearch}, and may be set in dependence on the value of S_{intrasearch} transmitted by the serving cell). In the example of Figure 1, the cell corresponding to the eNodeB 102a is determined to be a candidate perfect cell.

The independent base station 110 allocates, at 608, a first set of PRBs in which to transmit data via a downlink signal. In this example, the first set of PRBs is allocated so that the broadcast control signals transmitted by the independent base station 110 are transmitted at different times to the broadcast control signals transmitted by any of the eNodeBs 102. In particular, the PSS, SSS and PBCH transmitted by the independent base station 110 do not overlap with the PSS, SSS and PBCH transmitted by the eNodeB 102a which is determined to be a candidate perfect cell. In the present example, the independent base station 110 allocates PRBs using a subframe timing which is delayed compared with that of the eNodeB 102a by a predetermined number of subframes.

The independent base station 110 transmits, at 210, an interference signal configured to interfere with broadcast control signals transmitted by one or more eNodeBs 102 operating within the same frequency band in the vicinity of the independent base station 110, including the broadcast control signals of the candidate perfect cell. The interference signal may be configured to occupy all PRBs in the control region which are not occupied by the broadcast control signals of the independent base station 110, or may alternatively occupy only a specific set of PRBs in the control region, for example to specifically target the broadcast control signals of the candidate perfect cell. Advantageously, the interference signal can be transmitted over a longer period than that in which the broadcast control signals are transmitted, in order to account for timing differences at different locations in the cell.

The interference signal may be of any suitable form for interfering with the broadcast control signals of the candidate perfect cell, and optionally for interfering with the CRS of the candidate perfect cell in regions of the frequency band outside of the central control region. The interference signal may be constrained to occupy specific resource elements, for example to target the CRS of the candidate perfect cell. This approach may result in an interference signal which uses less power, but will only be suitable for degrading measurements of the candidate perfect cell. In any case, the interference signal should not overlap with PRBs needed by the target cell, or the CRS transmitted by the target cell. The transmission power for the interference signal may be configured in dependence on the signal strength and/or quality of the candidate perfect cell signal, and may further depend on how many of the CRS resource elements are able to be interfered with (a higher power may be required if fewer CRS resource elements are interfered with).

The independent base station 110 transmits, at 612, the first downlink signal in the first set of PRBs allocated at 608. Since the allocation of PRBs in the downlink signal can change over time, the configuration of the interference signal may need to be updated dynamically in order continue degrading measurements of the candidate perfect cell, whilst avoiding PRBs used by the target cell of the independent base station 110.

In order for the above method to be able to degrade measurements of a candidate perfect cell without also degrading measurements of the target cell, it is advantageous for the CRS of the target cell to occupy different resource elements to the CRS of the candidate perfect cell. In this case, before transmitting the interference signal, the independent base station 110 may therefore determine a CRS configuration of the downlink signal transmitted by the candidate perfect cell. In order to do this, the independent base stations 110 may decode the PSS, SSS and PBCH of the downlink signal, which include sufficient information to allow the independent base station 110 to determine the physical cell ID, system frame number, and system bandwidth associated with the downlink signal. These parameters are sufficient for the independent base station 110 to determine the CRS configuration of the downlink signal (in accordance with 3GPP TS 36.211 section 6.10.1).

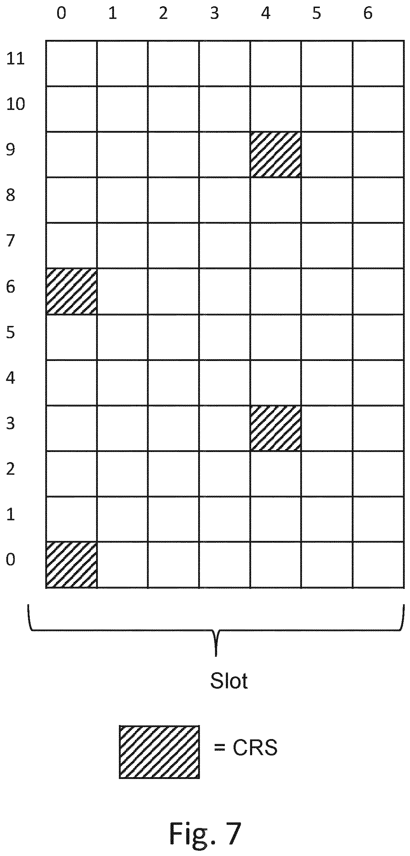

Figure 7 shows resource elements within a PRB occupied by the CRS in accordance with a possible reference signal configuration for a base station with one antenna port. The CRS is transmitted in identical resource elements in every PRB of the downlink signal, such that the transmission power of the CRS is spread throughout the downlink signal in frequency and time.

Having determined the CRS configuration of the candidate perfect cell, the independent base station 110 may select a CRS configuration for the target cell which is different to the CRS configuration of the candidate perfect cell. Selecting the CRS configuration of the target cell can be achieved by selecting a physical cell ID for the target cell that differs from the physical cell ID of the candidate perfect cell by a predetermined amount, which results in the CRS occupying resource elements on different subcarriers.

As explained above, although in the example of Figure 6 the independent base station 110 performs steps to search for downlink signals, determine timings for any detected downlink signals, and determine whether any of the detected downlink signals corresponds to a candidate perfect cell, in other examples these steps may be omitted. In this case, the independent base station 110 may simply transmit a downlink signal, irrespective of the characteristics of any nearby cells, along with an interference signal suitable for degrading measurements of downlink signals transmitted within any nearby cell.

In the examples described above, the independent base station 110 operates in the same frequency band as the eNodeB 102a, and therefore the corresponding cell reselection from the eNodeB 102a to independent base station 110 is an intra-frequency cell reselection, and measurement criterion 1 above is relevant for whether the UE 100 performs measurements of the downlink signal of the independent base station 110. Alternatively, if the independent base station 110 were to operate in a different frequency band to the eNodeB 102a, the cell reselection would be an inter-frequency cell reselection, and measurement criterion 2 above would be relevant. In this case, the UE 100 would only be permitted to refrain from measuring the downlink signal of the independent base station 110 if the cell reselection priority of the eNodeB 102a were higher than the reselection priority of the independent base station 110. The independent base station 110 can therefore avoid the "perfect cell" problem by operating at a frequency with a higher cell reselection priority than that of the independent base station 110. In cases where it is not possible for the independent base station 110 to operate at a higher priority frequency, the independent base station 110 may be tuned to the same frequency band as the candidate perfect cell, as described above, or a different frequency with the same or a lower priority. If a different frequency is used, a further antenna, either integral to, or communicatively coupled with, the independent base station 110, may be tuned to the frequency of the candidate perfect cell and used to transmit the interference signal.

It is feasible that more than one candidate perfect cell may exist at the location of the target cell, for example at different frequencies. In this case, multiple antennas may be required to transmit appropriately-configured interference signals for each of the candidate perfect cells. In any case, one or more dedicated antennas may be provided for transmitting interference signals, as an alternative to transmitting the interference signal using the same antenna that transmits the downlink signal. In an example where the present invention is used to degrade measurements of multiple neighbouring cells in the same frequency band, the target cell may advantageously transmit a downlink signal with a timing such that the PSS, SSS and PBCH of the target cell do not interfere with the PSS, SSS and PBCH of any of the neighbouring cells.

The method described facilitates cell reselection by the UE 100 from a candidate perfect cell to the target cell of the independent base station 110. In order to prevent the UE 100 from subsequently reselecting a different cell whilst still in the coverage area of the independent base station 110, the independent base station 110 can specify values of various parameters which makes such a reselection unlikely or impossible. For example, the independent base station 110 can set very low values for the thresholds S_{intrasearch} and/or Snonintrasearch, such that UEs camping on the independent base station 110 are permitted to stop measuring neighbouring cells, even when the Srxlev measured for the independent base station 110 is relatively low.

In the example of Figure 1, the independent base station 110 does not enable access to the same PLMN as the eNodeB 102a. Depending on the specific application, the independent base station 110 may enable access to a different PLMN, or may not be connected to any PLMN at all. In other examples, a separately introduced base station may be used to enable access to the same PLMN as surrounding base stations. In further examples, it may be desirable for a network operator to ensure that UEs perform reselection to a target cell when in the vicinity of the corresponding eNodeB. In such an example, a dedicated transmitter can be provided to transmit the necessary interference signal or signals. The MME of the eNodeB in question may be modified to enable controlled access to the network for UEs in the target cell, for example in dependence on a location of the UE in the cell, as described in patent publication WO 2018/046958.

Whilst the methods above have been described in the context of cell reselection for UEs in idle mode, the same methods can also be used to trigger events as defined in 3GPP TS 36.331 for a UE in connected mode, facilitating handover to a target cell.

The methods described above may be performed using processing circuitry integral to a base station. The processing circuitry may include any suitable form or forms of processing unit, for example a central processing unit (CPU), an application-specific integrated circuit (ASIC), and/or a digital signal processor (DSP). The method is generally implemented through the execution of machine-readable code stored on a non-transient storage medium at the base station.

Although in the illustrative example described above, the functionality of each of the networked base stations is incorporated into an eNodeB, it will be appreciated that for other RATs, the functionality of a base station may be performed by other network entities, for example a Next Generation NodeB (gNB) in 5G, a nodeB in 3G, a base station controller (BSC) and base transceiver station (BTS) in GSM.

A person skilled in the art would appreciate that, although the example described above involves a separately introduced base station, the methods described herein could equally be performed by an existing base station connected to a core network, in order to provide access to the core network via that base station.

The above embodiments are to be understood as illustrative examples of the invention. Further embodiments of the invention are envisaged. In particular, the present invention can be applied for any RAT which uses orthogonal frequency-division multiplexing, and which permits a UE to stop measuring neighbouring cells under certain conditions, including LTE-A and 5G.

## Claims

1. A method of establishing a wireless connection between a base station apparatus (110) and a mobile communications device (100) in accordance with a mobile communication standard in which data is communicated by wireless signals using orthogonal frequency-division multiplexing, the method comprising:
allocating, by the base station apparatus, a first set of resource blocks of a system frame for transmitting data from the base station apparatus to the mobile communications device via a downlink signal within a given frequency band, the data comprising broadcast control signals including a primary synchronisation signal, PSS, a secondary synchronisation signal, SSS, and a physical broadcast channel, PBCH; and
transmitting, by the base station apparatus:
the downlink signal within the first set of resource blocks of the system frame; and
an interference signal in a second set of resource blocks of the system frame, the second set of resource blocks being within the given frequency band and different from the first set of resource blocks, wherein the interference signal is configured to interfere with broadcast control signals transmitted by base stations (102) of one or more cells of a mobile communication network,
wherein the transmitting of the interference signal and the downlink signal causes the mobile communications device to undergo cell reselection, thereby to establish the wireless connection between the base station apparatus and the mobile communications device.

2. The method of claim 1, wherein the second set of resource blocks is disjoint from the first set of resource blocks.

3. The method of claim 1 or 2, wherein the second set of resource blocks is contained within a portion of the given frequency band in which the broadcast control signals are transmitted.

4. The method of any preceding claim, wherein the broadcast control signals transmitted by the base stations of the one or more cells of the mobile communication network comprise a PSS, an SSS, and a PBCH, for each of said one or more cells of the mobile communications network.

5. The method of any preceding claim, wherein the interference signal is further configured to degrade measurements by the mobile communications device of reference signals transmitted by the base stations of said one or more cells of the mobile communications network in one or more portions of the frequency band in which the broadcast reference signals are not transmitted.

6. The method of any preceding claim, wherein allocating the first set of resource blocks for transmitting the data via the downlink signal comprises:
determining timings of the broadcast control signals transmitted by the base stations of said one or more cells of the mobile communications network; and
allocating the first set of resource blocks so that broadcast control signals transmitted by the base station apparatus do not interfere with the broadcast control signals transmitted by the base stations of said one or more cells of the mobile communications network.

7. The method of claim 6, wherein the downlink signal is a first downlink signal, the method further comprising measuring a received signal strength and/or received signal quality of a second downlink signal transmitted by the base station of one of said one or more cells of the mobile communications network,
wherein the transmitting of the interference signal is dependent on said measured received signal strength and/or received signal quality exceeding a threshold.

8. The method of claim 7, wherein the threshold is dependent on a parameter transmitted within the second downlink signal indicating a minimum received signal strength and/or received signal quality of the second downlink signal for mobile communications devices camping on a cell associated with the second downlink signal to refrain from performing measurements of downlink signals other than the second downlink signal.

9. The method of claim 7 or 8, wherein a bandwidth of the transmitted interference signal depends on the measured received signal strength and/or received signal quality of the second downlink signal.

10. The method of any preceding claim, wherein the mobile communications standard is long-term evolution, LTE, or long-term evolution advanced, LTE-A.

11. A base station apparatus (110) for establishing a wireless connection with a mobile communications device (100) in accordance with a mobile communication standard in which data is communicated by wireless signals using orthogonal frequency-division multiplexing, the base station apparatus comprising:
a transmitter; and
processing circuitry arranged to allocate a first set of resource blocks of a system frame for transmitting data from the transmitter to the mobile communications device via a downlink signal within a given frequency band, the data comprising broadcast control signals including a PSS, an SSS, and a PBCH,
wherein the base station apparatus is arranged to transmit, using the transmitter:
the downlink signal within the first set of resource blocks of the system frame; and
an interference signal in a second set of resource blocks of the system frame, the second set of resource blocks being within the given frequency band and different from the first set of resource blocks, wherein the interference signal is configured to interfere with broadcast control signals transmitted by base stations (102) of one or more cells of a mobile communication network,
wherein the transmitting of the interference signal and the downlink signal causes the mobile communications device to undergo cell reselection, thereby to establish the wireless connection between the base station apparatus and the mobile communications device.

12. The base station apparatus of claim 11, wherein the second set of resource blocks is disjoint from the first set of resource blocks.

13. The base station apparatus of claim 12, wherein the second set of resource blocks is contained within a portion of the given frequency band in which the broadcast control signals are transmitted.

14. The base station apparatus of any of claims 12 to 13, wherein the interference signal is further configured to degrade measurements by the mobile communications device of reference signals transmitted by the base stations of said one or more cells of the mobile communications network in one or more portions of the frequency band in which the broadcast reference signals are not transmitted.

15. The base station apparatus of any of claims 11 to 14, further comprising a receiver, wherein allocating the first set of resource blocks for transmitting the data via the downlink signal comprises:
detecting, using the receiver, the broadcast control signals transmitted by the base stations of said one or more cells of the mobile communications network;
determining timings of the detected broadcast control signals; and
allocating the first set of resource blocks so that broadcast control signals transmitted within the first downlink signal do not interfere with the detected broadcast control signals.

## Patentansprüche

1. Verfahren zum Aufbauen einer drahtlosen Verbindung zwischen einer Basisstationseinrichtung (110) und einer mobilen Kommunikationsvorrichtung (100) gemäß einem mobilen Kommunikationsstandard, bei dem Daten durch drahtlose Signale unter Verwendung von orthogonaler Frequenzmultiplexierung gesendet werden, das Verfahren umfassend:
Zuweisen, durch die Basisstationseinrichtung, eines ersten Satzes von Ressourcenblöcken eines Systemrahmens zum Senden von Daten von der Basisstationseinrichtung zu der mobilen Kommunikationsvorrichtung über ein Downlink-Signal innerhalb eines gegebenen Frequenzbands, die Daten umfassend Broadcast-Steuersignale, die ein primäres Synchronisationssignal, PSS, ein sekundäres Synchronisationssignal, SSS, und einen physischen Broadcast-Kanal, PBCH, einschließen; und
Senden, durch die Basisstationseinrichtung:
des Downlink-Signals innerhalb des ersten Satzes von Ressourcenblöcken des Systemrahmens; und
eines Interferenzsignals in einem zweiten Satz von Ressourcenblöcken des Systemrahmens, wobei der zweite Satz von Ressourcenblöcken innerhalb des gegebenen Frequenzbands liegt und sich von dem ersten Satz von Ressourcenblöcken unterscheidet, wobei das Interferenzsignal konfiguriert ist, um mit Broadcast-Steuersignalen zu interferieren, die durch Basisstationen (102) einer oder mehrerer Zellen eines mobilen Kommunikationsnetzes gesendet werden,
wobei das Senden des Interferenzsignals und des Downlink-Signals die mobile Kommunikationsvorrichtung veranlasst, sich einer Zellneuauswahl zu unterziehen, wobei dadurch die drahtlose Verbindung zwischen der Basisstationseinrichtung und der mobilen Kommunikationsvorrichtung aufgebaut wird.

2. Verfahren nach Anspruch 1, wobei der zweite Satz von Ressourcenblöcken disjunkt zu dem ersten Satz von Ressourcenblöcken ist.

3. Verfahren nach Anspruch 1 oder 2, wobei der zweite Satz von Ressourcenblöcken innerhalb eines Abschnitts des gegebenen Frequenzbands enthalten ist, in dem die Broadcast-Steuersignale gesendet werden.

4. Verfahren nach einem der vorstehenden Ansprüche, wobei die Broadcast-Steuersignale, die durch die Basisstationen der einen oder der mehreren Zellen des Mobilkommunikationsnetzes gesendet werden, ein PSS, ein SSS und einen PBCH für jede der einen oder der mehreren Zellen des Mobilkommunikationsnetzes umfassen.

5. Verfahren nach einem der vorstehenden Ansprüche, wobei das Interferenzsignal ferner konfiguriert ist, um Messungen durch die mobile Kommunikationsvorrichtung von Referenzsignalen, die durch die Basisstationen der einen oder der mehreren Zellen des mobilen Kommunikationsnetzes gesendet werden, in einem oder mehreren Abschnitten des Frequenzbands zu verschlechtern, in dem die Broadcast-Referenzsignale nicht gesendet werden.

6. Verfahren nach einem der vorstehenden Ansprüche, wobei das Zuweisen des ersten Satzes von Ressourcenblöcken zum Senden der Daten über das Downlink-Signal umfasst:
Bestimmen von Zeitpunkten der Broadcast-Steuersignale, die durch die Basisstationen der einen oder der mehreren Zellen des Mobilkommunikationsnetzes gesendet werden; und
Zuweisen des ersten Satzes von Ressourcenblöcken, so dass Broadcast-Steuersignale, die durch die Basisstationseinrichtung gesendet werden, nicht mit den Broadcast-Steuersignalen interferieren, die durch die Basisstationen der einen oder der mehreren Zellen des Mobilkommunikationsnetzes gesendet werden.

7. Verfahren nach Anspruch 6, wobei das Downlink-Signal ein erstes Downlink-Signal ist, das Verfahren ferner umfassend ein Messen einer empfangenen Signalstärke und/oder empfangenen Signalqualität eines zweiten Downlink-Signals, das durch die Basisstation einer der einen oder der mehreren Zellen des mobilen Kommunikationsnetzes gesendet wird,
wobei das Senden des Interferenzsignals davon abhängt, dass die gemessene empfangene Signalstärke und/oder empfangene Signalqualität einen Schwellenwert überschreitet.

8. Verfahren nach Anspruch 7, wobei der Schwellenwert von einem Parameter abhängig ist, der innerhalb des zweiten Downlink-Signals gesendet wird, der eine minimale empfangene Signalstärke und/oder empfangene Signalqualität des zweiten Downlink-Signals für mobile Kommunikationsvorrichtungen anzeigt, die auf einer Zelle kampen, die dem zweiten Downlink-Signal zugeordnet ist, um davon abzusehen, Messungen von anderen Downlink-Signalen als dem zweiten Downlink-Signal durchzuführen.

9. Verfahren nach Anspruch 7 oder 8, wobei eine Bandbreite des gesendeten Interferenzsignals von der gemessenen empfangenen Signalstärke und/oder empfangenen Signalqualität des zweiten Downlink-Signals abhängt.

10. Verfahren nach einem der vorstehenden Ansprüche, wobei der mobile Kommunikationsstandard Long Term Evolution, LTE, oder Long Term Evolution Advanced, LTE-A, ist.

11. Basisstationseinrichtung (110) zum Aufbauen einer drahtlosen Verbindung mit einer mobilen Kommunikationsvorrichtung (100) gemäß einem mobilen Kommunikationsstandard, in dem Daten durch drahtlose Signale unter Verwendung von orthogonaler Frequenzmultiplexierung gesendet werden, die Basisstationseinrichtung umfassend:
einen Sender; und
Verarbeitungsschaltung, die angeordnet ist, um einen ersten Satz von Ressourcenblöcken eines Systemrahmens zum Senden von Daten von dem Sender zu der mobilen Kommunikationsvorrichtung über ein Downlink-Signal innerhalb eines gegebenen Frequenzbands zuzuweisen, die Daten umfassend Broadcast-Steuersignale, die ein PSS, ein SSS und einen PBCH einschließen,
wobei die Basisstationseinrichtung angeordnet ist, um unter Verwendung des Senders zu senden:
das Downlink-Signal innerhalb des ersten Satzes von Ressourcenblöcken des Systemrahmens; und
ein Interferenzsignal in einem zweiten Satz von Ressourcenblöcken des Systemrahmens, wobei der zweite Satz von Ressourcenblöcken innerhalb des gegebenen Frequenzbands liegt und sich von dem ersten Satz von Ressourcenblöcken unterscheidet, wobei das Interferenzsignal konfiguriert ist, um mit Broadcast-Steuersignalen zu interferieren, die durch Basisstationen (102) einer oder mehrerer Zellen eines mobilen Kommunikationsnetzes gesendet werden,
wobei das Senden des Interferenzsignals und des Downlink-Signals die mobile Kommunikationsvorrichtung veranlassen, sich einer Zellneuauswahl zu unterziehen, wobei dadurch die drahtlose Verbindung zwischen der Basisstationseinrichtung und der mobilen Kommunikationsvorrichtung aufgebaut wird.

12. Basisstationseinrichtung nach Anspruch 11, wobei der zweite Satz von Ressourcenblöcken disjunkt zu dem ersten Satz von Ressourcenblöcken ist.

13. Basisstationseinrichtung nach Anspruch 12, wobei der zweite Satz von Ressourcenblöcken innerhalb eines Abschnitts des gegebenen Frequenzbands enthalten ist, in dem die Broadcast-Steuersignale gesendet werden.

14. Basisstationseinrichtung nach einem der Ansprüche 12 bis 13, wobei das Interferenzsignal ferner konfiguriert ist, um Messungen durch die mobile Kommunikationsvorrichtung von Referenzsignalen, die durch die Basisstationen der einen oder der mehreren Zellen des mobilen Kommunikationsnetzes gesendet werden, in einem oder mehreren Abschnitten des Frequenzbands, in dem die Broadcast-Referenzsignale nicht gesendet werden, zu verschlechtern.

15. Basisstationseinrichtung nach einem der Ansprüche 11 bis 14, ferner umfassend einen Empfänger, wobei das Zuweisen des ersten Satzes von Ressourcenblöcken zum Senden der Daten über das Downlink-Signal umfasst:
Erfassen, unter Verwendung des Empfängers, der Broadcast-Steuersignale, die durch die Basisstationen der einen oder der mehreren Zellen des Mobilkommunikationsnetzes gesendet werden;
Bestimmen von Zeitpunkten der erfassten Broadcast-Steuersignale; und
Zuweisen des ersten Satzes von Ressourcenblöcken, sodass Broadcast-Steuersignale, die innerhalb des ersten Downlink-Signals gesendet werden, nicht mit den erfassten Broadcast-Steuersignalen interferieren.

## Revendications

1. Procédé permettant d'établir une connexion sans fil entre un appareil de station de base (110) et un dispositif de communications mobiles (100) conformément à une norme de communication mobile dans laquelle des données sont communiquées par des signaux sans fil à l'aide d'un multiplexage par répartition orthogonale de la fréquence, le procédé comprenant :
l'attribution, par l'appareil de station de base, d'un premier ensemble de blocs de ressources d'une trame système pour transmettre des données de l'appareil de station de base au dispositif de communications mobiles par l'intermédiaire d'un signal de liaison descendante au sein d'une bande de fréquence donné, les données comprenant des signaux de commande de diffusion comportant un signal synchronisation primaire, PSS, un signal de synchronisation secondaire, SSS, et un canal de diffusion physique, PBCH ; et
la transmission, par l'appareil de station de base :
du signal de liaison descendante au sein du premier ensemble de blocs de ressources de la trame système ; et
d'un signal d'interférence dans un second ensemble de blocs de ressources de la trame système, le second ensemble de blocs de ressources se trouvant au sein de la bande de fréquence donnée et étant différent du premier ensemble de blocs de ressources, dans lequel le signal d'interférence est configuré pour interférer avec des signaux de commande de diffusion transmis par des stations de base (102) d'une ou plusieurs cellules d'un réseau de communication mobile,
dans lequel la transmission du signal d'interférence et du signal de liaison descendante amène le dispositif de communications mobiles à subir une resélection de cellules, pour établir ainsi la connexion sans fil entre l'appareil de station de base et le dispositif de communications mobiles.

2. Procédé selon la revendication 1, dans lequel le second ensemble de blocs de ressources est disjoint du premier ensemble de blocs de ressources.

3. Procédé selon la revendication 1 ou 2, dans lequel le second ensemble de blocs de ressources est contenu au sein d'une partie de la bande de fréquence donnée dans laquelle les signaux de commande de diffusion sont transmis.

4. Procédé selon l'une quelconque revendication précédente, dans lequel les signaux de commande de diffusion transmis par les stations de base de la ou des cellules du réseau de communication mobile comprennent un PSS, un SSS et un PBCH, pour chacune parmi ladite ou lesdites cellules du réseau de communications mobiles.

5. Procédé selon l'une quelconque revendication précédente, dans lequel le signal d'interférence est en outre configuré pour dégrader des mesures effectuées par le dispositif de communications mobiles de signaux de référence transmis par les stations de base de ladite ou desdites cellules du réseau de communications mobiles dans une ou plusieurs parties de la bande de fréquence dans lesquelles les signaux de référence de diffusion ne sont pas transmis.

6. Procédé selon l'une quelconque revendication précédente, dans lequel l'attribution du premier ensemble de blocs de ressources pour la transmission des données par l'intermédiaire du signal de liaison descendante comprend :
la détermination de temporisations des signaux de commande de diffusion transmis par les stations de base de ladite ou desdites cellules du réseau de communications mobiles ; et
l'attribution du premier ensemble de blocs de ressources de sorte que des signaux de commande de diffusion transmis par l'appareil de station de base n'interfèrent pas avec les signaux de commande de diffusion transmis par les stations de base de ladite ou desdites cellules du réseau de communications mobiles.

7. Procédé selon la revendication 6, dans lequel le signal de liaison descendante est un premier signal de liaison descendante, le procédé comprenant en outre la mesure d'une intensité de signal reçu et/ou d'une qualité de signal reçu d'un second signal de liaison descendante transmis par la station de base de l'une parmi ladite ou lesdites cellules du réseau de communications mobiles,
dans lequel la transmission du signal d'interférence dépend de ladite intensité de signal reçu mesurée et/ou de ladite qualité de signal reçu dépassant un seuil.

8. Procédé selon la revendication 7, dans lequel le seuil dépend d'un paramètre transmis au sein du second signal de liaison descendante indiquant une intensité de signal reçu minimale et/ou une qualité de signal reçu du second signal de liaison descendante pour des dispositifs de communications mobiles en attente sur une cellule associée au second signal de liaison descendante pour s'abstenir de réaliser des mesures de signaux de liaison descendante autres que le second signal de liaison descendante.

9. Procédé selon la revendication 7 ou 8, dans lequel une largeur de bande du signal d'interférence transmis dépend de l'intensité de signal reçu mesurée et/ou de la qualité de signal reçu du second signal de liaison descendante.

10. Procédé selon l'une quelconque revendication précédente, dans lequel la norme de communications mobiles est une technologie d'évolution à long terme, LTE, ou une technologie d'évolution à long terme avancée, LTE-A.

11. Appareil de station de base (110) permettant d'établir une connexion sans fil avec un dispositif de communications mobiles (100) conformément à une norme de communication mobile dans laquelle des données sont communiquées par des signaux sans fil à l'aide d'un multiplexage par répartition orthogonale de la fréquence, l'appareil de station de base comprenant :
un transmetteur ; et
un système de circuits de traitement conçu pour attribuer un premier ensemble de blocs de ressources d'une trame système afin de transmettre des données du transmetteur au dispositif de communications mobiles par l'intermédiaire d'un signal de liaison descendante au sein d'une bande de fréquence donnée, les données comprenant des signaux de commande de diffusion comportant un PSS, un SSS et un PBCH,
dans lequel l'appareil de station de base est conçu pour transmettre, à l'aide du transmetteur :
le signal de liaison descendante au sein du premier ensemble de blocs de ressources de la trame système ; et
un signal d'interférence dans un second ensemble de blocs de ressources de la trame système, le second ensemble de blocs de ressources se trouvant au sein de la bande de fréquence donnée et étant différent du premier ensemble de blocs de ressources, dans lequel le signal d'interférence est configuré pour interférer avec des signaux de commande de diffusion transmis par des stations de base (102) d'une ou plusieurs cellules d'un réseau de communication mobile,
dans lequel la transmission du signal d'interférence et du signal de liaison descendante amène le dispositif de communications mobiles à subir une resélection de cellules, pour établir ainsi la connexion sans fil entre l'appareil de station de base et le dispositif de communications mobiles.

12. Appareil de station de base selon la revendication 11, dans lequel le second ensemble de blocs de ressources est disjoint du premier ensemble de blocs de ressources.

13. Appareil de station de base selon la revendication 12, dans lequel le second ensemble de blocs de ressources est contenu au sein d'une partie de la bande de fréquence donnée dans laquelle les signaux de commande de diffusion sont transmis.

14. Appareil de station de base selon l'une quelconque des revendications 12 à 13, dans lequel le signal d'interférence est en outre configuré pour dégrader des mesures effectuées par le dispositif de communications mobiles de signaux de référence transmis par les stations de base de ladite ou desdites cellules du réseau de communications mobiles dans une ou plusieurs parties de la bande de fréquence dans lesquelles les signaux de référence de diffusion ne sont pas transmis.

15. Appareil de station de base selon l'une quelconque des revendications 11 à 14, comprenant en outre un récepteur, dans lequel l'attribution du premier ensemble de blocs de ressources pour la transmission des données par l'intermédiaire du signal de liaison descendante comprend :
la détection, à l'aide du récepteur, des signaux de commande de diffusion transmis par les stations de base de ladite ou desdites cellules du réseau de communications mobiles ;
la détermination de temporisations des signaux de commande de diffusion détectés ; et
l'attribution du premier ensemble de blocs de ressources de sorte que des signaux de commande de diffusion transmis au sein du premier signal de liaison descendante n'interfèrent pas avec les signaux de commande de diffusion détectés.
